(19) Europäisches Patentamt
European Patent Office
Office européen des brevets

(11) EP 4 703 945 A1

(12) EUROPEAN PATENT APPLICATION

(43) Date of publication:
04.03.2026 Bulletin 2026/10

(21) Application number: 24306430.0

(22) Date of filing: 02.09.2024

(51) International Patent Classification (IPC):
G06F 21/64 $^{(2013.01)}$    G06N 3/098 $^{(2023.01)}$

(52) Cooperative Patent Classification (CPC):
G06F 21/64; G06N 3/08; G06N 3/098

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(71) Applicant: Commissariat à l'Energie Atomique et
aux Energies
Alternatives
75015 Paris (FR)

(72) Inventors:
• SEDDIK, Issam
  91191 GIF SUR YVETTE CEDEX (FR)
• TUCCI PIERGIOVAN, Sara
  91191 GIF SUR YVETTE CEDEX (FR)
• TAMAAZOUSTI, Mohamed
  91191 GIF SUR YVETTE CEDEX (FR)

(74) Representative: Atout PI Laplace
Immeuble Up On
25 Boulevard Romain Rolland
CS 40072
75685 Paris Cedex 14 (FR)

(54) METHOD AND SYSTEM FOR SECURE TRAINING OF MULTILAYER PERCEPTRON MACHINE LEARNING MODELS

(57)    A distributed mechanism for the training of neural networks is presented, in which Training nodes perform training operations in parallel on the basis of a common training data set and parameters defined in a common Ledger, and submit security blocks ensuring a cryptographic continuity with respect to the Ledger, and eventually respective proposals for new parameters to Audit nodes. The audit nodes assess the proposals on the basis of a proof of work and a loss function to reach a consensus for the selection of a set of new parameters for inclusion in the Ledger maintaining cryptographic continuity in the manner of a block chain. Older parameter sets may be deleted to control ledger size. Audit blocks may assess the loss function on the basis of different respective audit sets, each statistically coherent with the overall training set.

Fig 4

**Description**

**Field of the invention**

The invention relates to distributed training of Neural Networks.

**Background of the Invention**

The Multilayer Perceptron (MLP) is a foundational architecture in ML, consisting of Interconnected layers *li* of artificial neurons. Its structure implements a series of successive transformations: affine operations parameterized by weight matrices W and bias vectors *b*, followed by non-linear activation functions. This layered configuration enables the MLP to learn hierarchical representations of input data through repeated application of the composition. By stacking multiple such layers, the MLP can approximate complex, non-linear functions, making it capable of learning intricate patterns and relationships within the data.

The fundamental characteristics of a MLP are defined by its parameter set, comprising weights and biases distributed across its constituent layers, and its activation functions. These activation functions introduce critical non-linearities into the system, enabling the model to address computationally complex tasks. The synergistic interaction between the parameter set and activation functions determines the model's learning capacity and its ability to generalize from the training dataset to novel inputs. During the iterative training process, wherein the model progresses through various states, known as checkpoints, the integrity and security of these parameters are of paramount importance. Any unauthorized modifications to these recorded checkpoints could potentially result in distorted or compromised performance, thereby affecting the model's safety and reliability.

Ensuring Guaranteed Safe Training (GST) presents significant challenges in the development of AI systems. A critical concern is the inherent instability of model parameters, which are continuously adjusted throughout the model's lifecycle. These parameters are vulnerable to unauthorized alterations (i.e., falsification attacks) in white-box scenarios, known as "Weight Perturbations" which can compromise the integrity and reliability of the AI system. This vulnerability highlights the need for robust safeguards and verification mechanisms to ensure that model parameters remain unaltered during its training phase, especially as systems progress to higher AI Safety Levels (ASLs). Addressing this challenge is essential for strengthening the guarantees regarding AI systems' safety and performance.

The training process for large-scale AI models, such as ChatGPT, Claude, and LLaMA, requires significant computational and temporal resources. These models, renowned for their vast and intricate architectures, necessitate extensive amounts of training data and meticulous parameter adjustments. Consequently, the training phase can extend over weeks or even months, requiring substantial computational resources, using multiple high-performance GPUs. The scale and complexity of these models make them highly susceptible to disruptions during training, posing significant challenges for organizations; Continuous attacks on model parameters may escalate costs, necessitating substantial additional investments during compromised training phases; Moreover, persistent interruptions in the training process can also lead to delays in releasing new model versions, impacting time-to-market and competitive positioning. These issues not only increase development expenses but also risk compromising market share and customer confidence in the organization's ability to deliver reliable and GST AI solutions, especially as we progress towards higher ASLs where the stakes of model reliability and performance become increasingly critical.

Two primary categories of falsification attacks during the training process warrant careful consideration: Parameter Manipulation Attacks: These deliberate manipulations of model parameters pose a significant threat to model training integrity. Also referred to as weight attacks or model poisoning attacks, these tactics involve subtle modifications to parameters in memory, often employing techniques such as bit flipping (e.g., using laser beams and row hammer attacks). Detecting these manipulations is challenging during training phase, and their impact can severely compromise model reliability and erode user trust. The consequences of such attacks are particularly grave in cases of performance degradation, potentially requiring a costly restart of the resource-intensive training process.

Training Data Corruption Attacks: These more subtle attacks involve manipulating training data by adding, or injecting malicious samples. Such interventions can induce model overfitting, where the model performs exceptionally well on specific test sets but fails to generalize effectively to new data. This compromise in generalization capability can severely impact the model's practical utility and lead to aberrant behaviour during inference.

These vulnerabilities underscore the critical need for robust verification mechanisms and safeguards throughout the AI development pipeline (i.e., Machine Learning Operations (MLOps)). As we advance towards more sophisticated AI systems, ensuring the integrity of training processes on both parameter manipulation and training data corruption, becomes increasingly crucial for maintaining the reliability and safety of these systems. Addressing these challenges is fundamental to the broader goal of developing GST AI, especially for systems that operate at higher ASLs.

Ensuring the security and integrity of AI model parameters remains a critical challenge during training, particularly in collaborative training environments. This issue is especially pronounced when participants have unrestricted access to all elements of the training process, including datasets, model architectures, and interim model states (i.e., checkpoints). Current solutions are confined to the deployment stage and encounter substantial difficulties when applied to large-scale models during their intensive training process. Below are some proposed approaches to address these issues, along with their respective focuses and limitations:

The « Proof-of-Training-Data » approach as described in the article by Choi, D., Shavit, Y., & Duvenaud, D. K. (2024) entitled "Tools for verifying neural models' training data." Published in Advances in Neural Information Processing Systems, 36 verifies AI model provenance by allowing third-party confirmation of training data and computations. It uses verifiable pre-commitments to random seeds and exploits temporary overfitting to detect specific training data. While effective for detecting training data corruption, its efficiency may vary with model size and computational complexity. A key limitation is its post-training application, precluding real-time monitoring during training.

« ZKAudit » as described in the article by Waiwitlikhit, Suppakit, et al. entitled "Trustless Audits without Revealing Data or Models." arXiv preprint arXiv:2404.04500 (2024), enables ML model audits using zero-knowledge proofs, preserving privacy while verifying training integrity. However, it faces significant computational costs, especially for large models, limiting real-time application. Its support for only basic training techniques and certain model types restricts broader applicability. While innovative, ZKAudit's current limitations in scalability and versatility highlight the need for further optimization to address the dynamic nature of modern AI training processes.

« Bayesian Compromise Detection (BCD) » as described in the article by Kuttichira, D. P., Gupta, S., Nguyen, D., Rana, S., & Venkatesh, S. (2022) entitled "Verification of integrity of deployed deep learning models using Bayesian Optimization." Published in Knowledge-based systems, 241, 108238, employs variational autoencoders and Bayesian optimization to identify model compromises. However, its primary design is for deployed models, presenting considerable computational overhead and scalability challenges if used at each update on model parameters during training. While effective in specific scenarios, its implementation during the training phase is impractical due to these constraints.

« Verideep » as described in the article by He, Z., Zhang, T., & Lee, R. B. (2018) entitled "Verideep: Verifying integrity of deep neural networks through sensitive-sample fingerprinting" published arXiv preprint arXiv:1808.03277, generates inputs that are highly responsive to changes in model parameters to verify model integrity. While effective for deployed models, its application during training is impractical due to high computational costs, instability arising from frequent parameter updates, and potential interference with the learning process. Consequently, its utility is limited in the context of on-going training.

« DeepRing » as described in the article by Goel, A., Agarwal, A., Vatsa, M., Singh, R., & Ratha, N. (2019), entitled "DeepRing: Protecting deep neural network with blockchain" published in Proceedings of the IEEE/CVF conference on computer vision and pattern recognition workshops (pp. 0-0), combines neural networks with a specific blockchain design to attend model security and integrity during inference (i.e., In the deployment phase). Although innovative, it would face significant challenges while applying it during the training of models due to substantial computational and memory requirements.

These approaches are primarily designed for deployment rather than the training phase, and they do not adequately address the issues of training data corruption or model manipulation during training. The solutions often require substantial computational resources, making them unsuitable for real-time monitoring. Furthermore, they do not effectively address the specific challenges posed by GST AI systems. Consequently, while several approaches show promise, achieving enhanced safety in large-scale collaborative AI model training remains hindered by these significant limitations. It is an objective of the present invention to provide improvements in at least some of these regards.


SUMMARY OF THE INVENTION

In accordance with the present invention in a first aspect there is provided a computer implemented method for performing training of a multilayer perceptron machine learning model comprising a plurality of neurons, in a system comprising a plurality of processing nodes, with reference to a ledger comprising a sequence of blocks reflecting the parameters of the neurons. The method comprises retrieving an initial armour block comprising respective weight matrices for each neuron, together with a hash of a preceding block in the ledger, a nonce value, and a timestamp, retrieving an initial security block comprising a hash of the penultimate set of weights obtained in a training operation of the initial armour block together with a hash of a preceding block in the ledger, a nonce value, and a timestamp, wherein the processing nodes comprise a trainer node.

The method comprises the further step of performing a training operation using a training dataset at the trainer node on the basis of the initial armour block.

During the training operation a sequence of security blocks is defined, each security block comprising a hash of the weights obtained in the training operation at the time of definition of the respective security blocks together with a hash of the preceding security block in the sequence, a nonce value, and a timestamp.

On completion of the training operation, a new armour block comprising respective weight matrices for each neuron obtained as a final result of the training operation is compiled, together with a hash of the last security block defined, a nonce value, and a timestamp.

A new ledger is then defined comprising the initial security block, the initial armour block, each security block and the new armour block.

In a development of the first aspect, each nonce value is determined such that the hash of the block as a whole is less than a predefined value.

In a development of the first aspect, the initial armour block and the new armour block additionally define an architecture of the multilayer perceptron machine learning model, and wherein the training operation further comprises identifying amendments to the architecture of the multilayer perceptron machine learning model, and wherein the step of compiling a new armour block further comprises incorporating a representation of the amendments to the architecture of the multilayer perceptron machine learning model in the new armour block.

In a further development of the first aspect, the steps of performing a training operation, the step of defining a sequence of security blocks and the step of compiling a new armour block are performed in parallel at a plurality of the training nodes on the basis of a common initial security block and initial armour block, and a common the training dataset so as to provide a corresponding plurality of sequences of security blocks and associated new armour blocks.

In a development of the first aspect, each trainer node is specified as being of equivalent processing power.

In a further development of the first aspect, the method comprises a further step of evaluating a loss function of the respective multilayer perceptron machine learning model when incorporating the parameters specified by each new armour block, whereby at the step of defining a new ledger file, the sequence of security blocks and new armour block incorporated in the new ledger file are the new armour block providing the smallest loss function, and the sequence of security blocks associated therewith.

In a further development of the first aspect, the processing nodes further comprise a plurality of audit nodes, wherein the method comprises a further step each trainer node broadcasting the respective sequence of security blocks and new armour block to all other processing nodes, and wherein the step of evaluating a loss function is performed in parallel at the plurality of audit nodes.

In a further development of the first aspect, the audit node evaluates a loss function for a multilayer perceptron machine learning model using a first validation data set, when incorporating the parameters specified by each new armour block, and wherein each audit node evaluates a loss function for the multilayer perceptron machine learning model using the first validation data set, and compiling the new ledger file on the basis of the new armour block and associated security blocks representing the lowest overall error function.

In a further development of the first aspect, the audit node evaluates a loss function for a multilayer perceptron machine learning model using a first validation data set specified by each new armour block received within a specified period from the step of retrieving an initial armour block.

In a further development of the first aspect, each said audit node verifies that each said nonce value is determined such that the hash of each block as a whole is less than a predefined value, and excludes any new armour block provided by a trainer node issuing a block whose hash of each block as a whole is less than a predefined value.

In a further development of the first aspect, the steps of retrieving an initial armour block, retrieving an initial security block performing a training operation, defining a sequence of security blocks, compiling a new armour block and defining a new ledger file are repeated iteratively, with the new ledger file defined in one iteration defining the initial armour block and initial security block for the next.

In accordance with the present invention in a second aspect there is provided a computer implemented method for performing training of a multilayer perceptron machine learning model comprising a plurality of neurons, in a system comprising a plurality of processing nodes, with reference to a ledger comprising a sequence of blocks reflecting the parameters of the neurons. The method comprises receiving a plurality of respective sequences of security blocks and corresponding new armour blocks from a respective plurality of trainer nodes belonging to the processing nodes, each respective sequence of security blocks and corresponding new armour blocks being obtained at a respective training node as the result of a training operation performed on the basis of a common initial armour block, the initial armour block comprising respective weight matrices for each neuron, together with a hash of a preceding block in the ledger, a nonce value, and a timestamp.

A loss function of the multilayer perceptron machine learning model using a first validation data set comprising a respective specified subset of the training dataset, when incorporating the parameters specified by each new armour block comprising respective weight matrices for each neuron obtained as a final result of the training operation, together with a hash of the last security block defined, a nonce value, and a timestamp provided by a trainer node belonging to the processing nodes as a result of a training operation is evaluated, as well as a loss function of the multilayer perceptron machine learning model using the first validation data set, when incorporating the parameters specified by when incorporating the parameters specified by the initial armour block.

A new ledger file is then compiled on the basis of the new armour block and associated security blocks representing the lowest overall error function.

In a development of the second aspect, the new ledger file is transmitted to the trainer node for a further iteration of training.

In a further development of the second aspect, the method comprises a further step of changing the role of one or more nodes from the role of audit node to the role of trainer node, or vice versa, between any two iterations.

In a further development of the second aspect, the each node has a respective private encryption key and corresponding public encryption key known to all other nodes, whereby each public encryption key serves as an identifier for the associated node, and each broadcast by a node is encrypted using the private key of the respective node.

In accordance with the present invention in a third aspect there is provided a computer program comprising instructions in which, when the program is executed by a computer, cause the computer to carry out the method of the first or second aspect.

In accordance with the present invention in a fourth aspect there is provided a computer-readable medium comprising instructions which, when executed by a computer, cause the computer to carry out the method of the first or second aspect.

In accordance with the present invention in a fifth aspect there is provided system for performing training for a multilayer perceptron machine learning model comprising a plurality of neurons, with reference to a ledger comprising a sequence of blocks reflecting the parameters of the neurons, the system comprising a plurality of processing nodes, the nodes comprising a trainer nod. The trainer node is configured to retrieve an initial armour block comprising respective weight matrices for each neuron, together with a hash of a preceding block in the ledger, a nonce value, and a timestamp, and to retrieve an initial security block comprising a hash of the penultimate set of weights obtained in a training operation of the initial amour block together with a hash of a preceding block in the ledger, a nonce value, and a timestamp.

A training operation at the trainer node on the basis of the initial armour block, and the trainer node is further configured during the training operation to define a sequence of security blocks, each security block comprising a hash of the weights obtained in the training operation at the time of definition of the respective security blocks together with a hash of the preceding security block in the sequence, a nonce value, and a timestamp,
the trainer node being further configured on completion of the training operation to compile a new armour block comprising respective weight matrices for each neuron obtained as a final result of the training operation, together with a hash of the last security block defined, a nonce value, and a timestamp.

The trainer node is further configured to obtain a new ledger file comprising the initial security block, the initial armour block, each security block and the new armour block.

In a development of the fifth aspect, the initial armour block and the new armour block additionally define an architecture of the multilayer perceptron machine learning model, and wherein the trainer node is further configured during the training operation to identify amendments to the architecture of the multilayer perceptron machine learning model, and to compiling the new armour block incorporating a representation of the amendments to the architecture of the multilayer perceptron machine learning model in the new armour block.

In a further development of the fifth aspect, the system comprises a plurality of the training nodes.

In a further development of the fifth aspect each trainer node has equivalent processing power.

In accordance with the present invention in a third aspect there is provided a system for performing training for a multilayer perceptron machine learning model comprising a plurality of neurons, with reference to a ledger comprising a sequence of blocks reflecting the parameters of the neurons, the system comprising a plurality of processing nodes, the nodes comprising a plurality of audit nodes including a first audit node.

The first audit node is configured to receive a plurality of respective sequences of security blocks and corresponding new armour blocks from a respective plurality of trainer nodes belonging to the processing nodes, each respective sequence of security blocks and corresponding new armour blocks being obtained at a respective processing node as the result of a training operation performed on the basis of a common initial armour block, the initial armour block comprising respective weight matrices for each neuron, together with a hash of a preceding block in the ledger, a nonce value, and a timestamp.

The first audit node is further configured to evaluate a loss function of the multilayer perceptron machine learning model using a first validation data set, when incorporating the parameters specified by each new armour block comprising respective weight matrices for each neuron obtained as a final result of the training operation, together with a hash of the last security block defined, a nonce value, and a timestamp provided by a trainer node belonging to the processing nodes as a result of a training operation, as well as a loss function of the multilayer perceptron machine learning model using the first validation data set, when incorporating the parameters specified by when incorporating the parameters specified by the initial armour block.

The first audit node is then configured to compile a new ledger file on the basis of the new armour block and associated security blocks representing the lowest overall error function.

BRIEF DESCRIPTION OF THE DRAWINGS

The invention will be better understood and its various features and advantages will emerge from the following description of a number of exemplary embodiments provided for illustration purposes only and its appended figures in which:

Figure 1a    presents a method for performing training of a multilayer perceptron machine learning model comprising a plurality of neurons in accordance with an embodiment;

Figure 1b    presents further steps in a method for performing training of a multilayer perceptron machine learning model comprising a plurality of neurons in accordance with an embodiment;

Figure 2    presents schematically a block sequence in accordance with embodiments;

Figure 3    presents an example of a structure of the Ledger as may be defined in accordance with embodiments;

Figure 4    presents schematically the evolution of an exemplary Ledger as a result of the application of successive validations in accordance with embodiments;

Figure 5    presents a method for performing training of a multilayer perceptron machine learning model comprising a plurality of neurons in accordance with a further embodiment; and

Figure 6    presents a system in accordance with certain embodiments.

DETAILED DESCRIPTION OF THE INVENTION

In view of the foregoing, a collaborative training environment is proposed where multiple participants independently perform tasks and propose their model updates to the network in order to reach a majority consensus with a more accurate model. In this work, we assume that the training data $(X, Y)$ (i.e., where $X$ represents the set of input variables, and Y denotes the corresponding target variables) is pre-prepared, agreed upon, and distributed to all participants. This assumption ensures a controlled environment, preventing participation with non-approved datasets. Each participant's contribution must be based on the agreed dataset. Participants are required to train the proposed model on the shared training data through a series of iterations and submit the model to the network as a contribution.

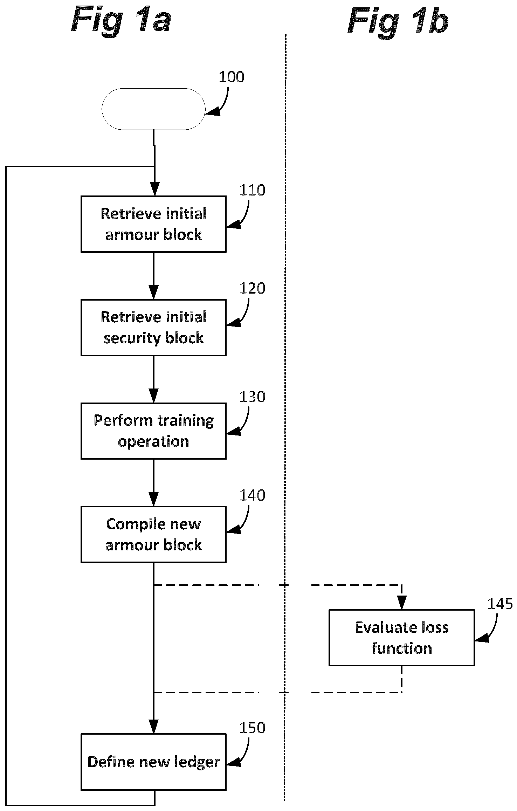

Figure 1a presents a method for performing training of a multilayer perceptron machine learning model comprising a plurality of neurons in accordance with an embodiment

Figure 1a presents a method for performing training of a multilayer perceptron machine learning model in a system comprising a plurality of processing nodes comprising a trainer node, with reference to a ledger comprising a sequence of blocks reflecting the parameters of the neurons. As discussed above, parameters comprise In an MLP, the model parameters comprise of weights, and in some embodiments biases, architecture definitions, etc.

As shown, the method begins at step 100 before proceeding to step 110 of retrieving an initial "armour block" comprising respective weight matrices for each neuron, together with a hash of a preceding block in the ledger, a nonce value, and a timestamp.

The method then proceeds to step 120 of retrieving an initial security block comprising a hash of the penultimate set of weights obtained in a training operation of the initial armour block together with a hash of a preceding block in the ledger, a nonce value, and a timestamp.

The method then proceeds to step 130 of performing a training operation using a training dataset at the trainer node on the basis of the initial armour block, during which a sequence of security blocks are defined each security block comprising a hash of the weights obtained in the training operation at the time of definition of the respective security blocks together with a hash of the preceding security block in the sequence, a nonce value, and a timestamp.

The method then proceeds to step 140 on completion of the training operation to compile a new armour block comprising respective weight matrices for each neuron obtained as a final result of the training operation, together with a hash of the last security block defined, a nonce value, and a timestamp, and finally at step 150 defining a new ledger comprising the initial security block, the initial armour block, each security block and the new armour block. It may be noted that a new ledger file in this sense merely means a ledger file which differs from the previous file - it may retain the same general formal, file name and respective storage location of the file it replaces.

The steps of retrieving an initial armour block, retrieving an initial security block performing a training operation, defining a sequence of security blocks, compiling a new armour block and defining a new ledger file may be repeated iteratively, with the new ledger file defined in one iteration defining the initial armour block and initial security block for the next.

It will be appreciated that the steps 110 and 120 may be performed in any order, or in parallel.

By this means, the security mechanisms provided by a blockchain approach help ensure the reliability of the possible new configuration arising from the training operation.

Figure 1b presents further steps in a method for performing training of a multilayer perceptron machine learning model comprising a plurality of neurons in accordance with an embodiment

As discussed in more detail below, the method of figure 1a may be supplemented with the steps of figure 1b. Specifically, as shown in figure 1b, a further step 145 of evaluating a loss function of the respective multilayer perceptron machine learning model when incorporating the parameters specified by each new armour block may be performed whereby at the step 150 of defining a new ledger file, the sequence of security blocks and new armour block incorporated in the new ledger file are the new armour block providing the smallest loss function, and the sequence of security blocks associated therewith.

Indeed, as discussed further below, the processing nodes may further comprise a plurality of audit nodes, such that each trainer node may broadcast the respective sequence of security blocks and new armour block to all other processing nodes, and the step of evaluating a loss function may be performed in parallel at the plurality of audit nodes.

As will become clear in the following discussion, embodiments may comprise operations as may be performed at the training nodes, operations as may be performed at the audit nodes, or combinations of both.

The following section outlines and defines the components and methodological terminology used in certain exemplary implementations of the foregoing.

A WorkNet constituted by the processing nodes mentioned above may comprise as a network $G = (V, E)$, where $V = \{v_1, v_2, ..., v_m\}$ is a finite set of nodes, typically $V \in O(10^1)$ *to* $O(10^2)$, and $E \subseteq V \times V$ represents peer-to-peer communication channels. Each node $vi \in V$ is associated with a unique key pair $k_i^{priv}$, $k_i^{pub}$ where $k_i^{priv}$ is the private key used for signing operations and $k_i^{pub}$ serves as the node's public identifier. As discussed above Nodes can assume typically one of two primary roles:

- $r_1$ *(Trainer):* which initiates training sessions to optimize the shared AI model $M$ with hyperparameters (e.g., learning rate, batch size, dropout rate, etc.) and architecture (i.e., number of layers and neurons in each layer) choices $(0, \Gamma)$ to discover an improved proposal model $M^*$ with new parameters.

- $r_2$ *(Auditor):* which validates Trainer nodes work through an audit operation : $M^* \rightarrow \{0, 1\}$, where $A(M^*) = 1$ indicates successful validation and $A(M^*) = 0$ indicates failure. All nodes can dynamically switch between roles, contributing to both model improvement and network integrity.

  As such, the processing nodes may further comprise a plurality of audit nodes, wherein the method comprises a further step of each trainer node broadcasting the respective sequence of security blocks and new armour block to all other processing nodes, and wherein the step of evaluating a loss function is performed in parallel at the plurality of audit nodes.

The role of one or more nodes may be changed from the role of audit node to the role of trainer node, or vice versa, between any two iterations.

Each node may have a respective private encryption key and corresponding public encryption key known to all other nodes, whereby each public encryption key serves as an identifier for the associated node in the operations discussed herein, and each broadcast or transmission by a node is encrypted using the private key of the respective node.

As discussed above, the blocks are defined as an output of a training operation. A training operation may comprise a training session which may comprise a defined interval during which a designated Trainer node $p_i \in P \leq V$ performs an update of the model $M$ utilizing an agreed-upon training dataset $(,)$. The primary objective is to optimize the model by incorporating new parameter sets $\Theta i, \Gamma$, where $\Theta i$ represents the *Trainer's* potential alternative hyperparameter configuration, and $\Gamma i$ denotes his possible modification to the overall architecture of the most recent model version stored in the distributed Ledger $L$.

During a training session, Trainer nodes broadcast sequences of blocks, denoted as $S$ with a size $z$, within the WorkNet for verification and evaluation.

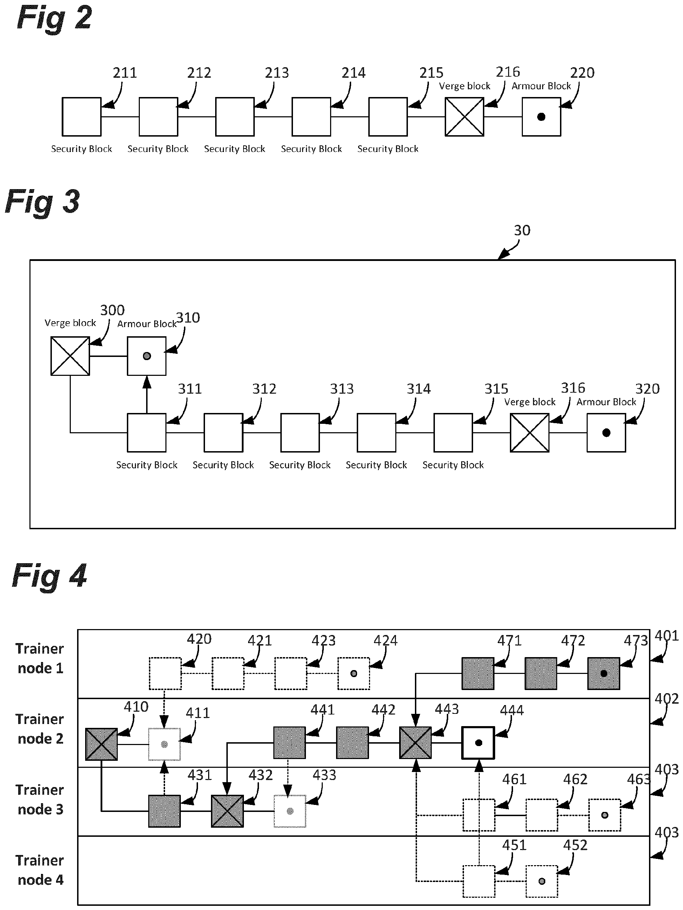

Figure 2 presents schematically a block sequence in accordance with embodiments.

In general the length $z$ of sequence $Sj$ may be selected to confirm the 'Armour block' from the preceding sequence $Sj$-1 (if present).

As shown, each sequence S comprises $(z - 1)$ 'Security blocks' 211, 212, 213, 214, 215, 216, and one 'Armour block', or terminal block 220. The head of a sequence, called "HeadSequence," is a Verge Block, which as shown may be the final Security Block of the previous sequence (if present).

The content of these respective block types is discussed in more detail below.

Figure 3 presents an example of a structure of the Ledger as may be defined in accordance with embodiments.

As shown, the Ledger L 30 may be defined as a shared data file (.dat) that encapsulates a tree-like data structure.

Is will become clear from the present discuss, the ledger exhibits dynamic growth through the continuous addition of blocks, which are appended as updates originating from nodes within the WorkNet as a result of an iterative training process. Each node $v_i$ maintains a replica of the Ledger and actively participates in its evolutionary process. This participation occurs through the contribution of updates during either the validation phase (performed by audit role) or the training phase (executed by train role). The Ledger's size is approximately maintained at $2 \times siz(M) + \varepsilon$, where $\varepsilon$ represents a negligible constant overhead.

As shown the Ledger 30 comprises two main block types:

- Armour Block ($B_\square$): a *Ledger* block whose size is approximately the size of the model. This block stores the parameters of a model when it is updated by a Trainer within *WorkNet.* It is important to note that this is the most crucial block and must be secured.

$$B_\square := weights, previoursHash, nonce, timestamp$$

Where :

> *weights:* New weights of the model found during the training session.
> *previousHash*: Hash value that references the previous block.
> *nonce:* Arbitrary number found by the Trainer to solve the mathematical puzzle posed in the WorkNet.

Each armour block may additionally define an architecture of the multilayer perceptron machine learning model, such that the training operation may comprise identifying amendments to the architecture of the multilayer perceptron machine learning model, and wherein the step of compiling a new armour block may further comprise incorporating a representation of those amendments to the architecture of the multilayer perceptron machine learning model in the new armour block.

- Security Block ($B_\square$, $B_\boxtimes$): blocks of negligible size compared to the Armour block, typically found between two successive Armour blocks. They serve to confirm the weights recorded during the model's training. We note by $B\boxtimes$ a verge block from which a fork is created (i.e., from which all undo operations on the shared ledger will be executed).

$$B_\square \lor B\boxtimes := weightsHash, previoursHash, nonce, timestamp$$

Where :
*weightsHash*: Hash of the weights of a given model state.

Specifically, as shown an exemplary ledger 30 comprises a first sequence comprising first verge block 300, followed by a first Armour Block 310, a second sequence, substantially as described with reference to figure 1, comprising security blocks 311, 312, 313, 314, 315 and 316 in sequence, with security block 311 depending on Verge block 300 and first Armour Block 310. Security Block 316 is defined as a verge block, and is followed by second armour block 320. As such, the exemplary ledger 30 defines two successive AI configurations, with the second, defined in the second sequence supplanting the first as the most recent, and presumably best performing configuration.

Consensus

A real Worknet will typically comprise multiple training nodes, each performing a parallel training operation, the results of which may be in contention for selection as the best new configuration to be added to the Ledger as the result of a given training iteration.

In certain embodiments, a consensus mechanism $\Omega$ may be employed to agree on model update.

A flat model may be assumed where $\forall vi, v_j \in : c(v_i) = c(v_j)$, with $c(v)$ representing a node's computing power, ensuring fairness (i.e., equal opportunity to propose an improved update model).

Alternatively, each trainer node may be specified as being of equivalent processing power.

A given Trainer node may be required to address two key challenges to propose a new model state that can be accepted by nodes within the WorkNet:

> a. *Proof of Work (PoW) Difficulty:* For each constructed block (Security block or Armour block), the Trainer node may be required to find a hash that meets the difficulty requirements set by the WorkNet.

A known approach to establishing Proof of work is the inclusion in each block of a nonce value is determined such that the hash of the block as a whole is less than a predefined value.

b. *Optimization Difficulty:* A good proposal is one that provides an optimal model for the task, evaluated against the most recent versions and competitive versions in the case of collision.

As such, there may be performed a further step of evaluating a loss function of the respective multilayer perceptron machine learning model when incorporating the parameters specified by each new armour block, whereby at the step of defining a new ledger file, the sequence of security blocks and new armour block incorporated in the new ledger file are the new armour block providing the smallest loss function, and the sequence of security blocks associated therewith.

In the occurrence of a collision, where multiple trainers propose divergent models with varying scores, audit nodes may conduct a comparative analysis. They rank the proposed models based on dual criteria: Proof of Work (PoW) and optimization performance (e.g., loss value). The highest ranking model, as determined by these criteria, may then be selected for integration into the distributed ledger, updating the local copies maintained by WorkNet nodes.

On this basis, the steps of performing a training operation, defining a sequence of security blocks and compiling a new armour block are performed in parallel at a plurality of training nodes on the basis of a common initial security block and initial armour block, and a common training dataset so as to provide a corresponding plurality of sequences of security blocks and associated new armour blocks.

Model validation

To validate the proposed models within the WorkNet, a rigorous audit process may be adopted to evaluate model updates proposed by trainers. This process may utilize a held-out validation dataset, which may be systematically segregated from the training data to maintain integrity and prevent data leakage.

In particular, the overall data set may be divided between a training dataset and a validation set (with both the training dataset and validation set constituting similarly representative data), and the validation set may in turn be segmented into a plurality of audit sets, each again being statistically representative of the overall dataset.

On this basis, to mitigate potential risks associated with malicious nodes attempting to compromise the validation process-either through using validation data to train the model or by injecting malicious samples-a distributed validation strategy may be envisaged.

Such an approach may involve the following steps:

1. Initial validation data partitioning: The validation dataset is carefully segmented during system initialization, ensuring that each partition is statistically representative of the entire dataset.

2. Node-specific audit sets: Each node in the network is assigned a unique partition of the validation data, henceforth referred to as its "audit set."

This distributed methodology enhances the robustness of the validation process by:

- Limiting the exposure of the full validation dataset to any single node.
- Reducing the potential impact of compromised nodes on the overall validation accuracy.

The model verification and auditing process in the proposed distributed validation may adhere to a structured protocol comprising three steps:

- Prior to submitting a novel model for validation, the trainer node verifies the integrity of its local distributed ledger to ensure consistency with the current WorkNet state before proposing a new sequence.
- Upon receiving a proposal from potential trainer, the audit nodes perform analogous integrity checks on their respective distributed ledgers.
- Finally, the audit nodes and the trainer node conduct a distributed evaluation, assessing the proposed model using their assigned audit sets.

In this distributed validation strategy, audit nodes evaluate the newly proposed model M' using their independent audit datasets $D = \{D1, ..., Dm\}$. Each node $v_i$ assesses the proposed sequence S' against the two criteria:

$$\forall B \in S', (B) \leq \alpha$$

Where:

*B* represents either a Security block or Armour block in S'.
$\phi$ is the hash function.
$\alpha$ is the difficulty target.

And

$$(M',Di) < L(M,Di)$$

Where:

*L* is the loss function.
M is the most recent model version recorded in the shared Ledger.
*Di* is the audit dataset of node $v_i$.

If S' simultaneously satisfies the conditions (4) and (5), then S' is considered valid and added to a ranking list R of each node *vi* for a predetermined interval *Δt,* known as the 'confirmation time.' During Δt, auditors await broadcasts of competitive sequences from other trainers. Nodes in the WorkNet await valid model sequences that appear on their respective ranking lists. These sequences are generated by trainers who perform the training session and auditors who validate it. Subsequently, the nodes update their local distributed ledgers with a single, consensus-determined sequence. Given that all auditors employ an identical consensus protocol *Ω* and utilize audit sets that are statistically representative of the entire dataset, a majority of the nodes (i.e., over 51% within the WorkNet) will converge on a similar ranking list after the proposals have been evaluated. Each node's ledger is then updated on the basis of the version of the proposal that ranks highest in these lists, and other proposals are rejected.

As such, each node in the WorkNet may have its own unique partition of the validation data, called its "audit set". This distributed approach is used to enhance robustness and reduce the risk of data leakage or malicious manipulation (training data corruption). When a trainer proposes a new model version, all auditor nodes evaluate this proposed model using their respective audit sets. The consensus mechanism according to such embodiments doesn't require multiple nodes to evaluate the same subpart or a part of the model. Instead, each node evaluates the entire proposed model using its unique audit set. For a proposed model to be accepted, it needs to satisfy two main criteria across a majority of nodes: a) The proof of work difficulty requirement (for each block in the proposed sequence) b) Improved performance on the node's audit set compared to the current version of the model stored in the shared ledger. This means that if the proposed model genuinely improves performance, it should show improvement across the majority of audit sets leading to consensus (agreement)(condition: when splitting validation set, each audit set should be statistically representative to the dataset). The 51% agreement refers to the overall acceptance of the proposed model based on evaluations across different audit sets, not multiple evaluations of the same subpart.

Accordingly, each audit node may evaluate a loss function for a multilayer perceptron machine learning model using a respective audit data set, when incorporating the parameters specified by each new armour block, and wherein each audit node evaluates a loss function for the multilayer perceptron machine learning model using the first validation data set, and compiling the new ledger file on the basis of the new armour block and associated security blocks representing the lowest overall error function.

That is to say, each audit node may evaluate the loss function for the entire MLP model using its own respective audit set.

Each node may obtain the value of the loss of the old model and compare it with the loss of the new model. The training set is the subset of the dataset, is used to train the model, and the validation set is the held-out set used to evaluate the model; This validation set may be distributed among all the nodes so that each one use its own segment to participate in the audit operation.

The validation may be segmented into multiple statistically representative partitions, with each partition assigned to a distinct node in the network as its "audit set." When a new model version is proposed, instead of evaluating it against the complete validation set, each node independently assesses the entire proposed model using only its assigned audit set. Each node may maintain a replica of the ledger.

Each Audit node may wait for all Training nodes to provide a proposal before beginning a loss function evaluation for each response, or each audit node may evaluate a loss function for each multilayer perceptron machine learning model specified by each new armour block received within a specified period from the step retrieving an initial armour block.

Undo operation

Embodiments aim to maintain the most efficient versions of the model for a given task, as older versions become less relevant over time. To optimize storage and processing, a mechanism may be implemented to remove outdated versions when more efficient ones are developed. To achieve this, the concept of a 'Redactable Blockchain' may be employed. This approach allows for the removal of historical weights from the chain through a hard fork mechanism. The process involves:

(1). Adding a lightweight block containing only the hash value of the most recent parameter stored in the last block.
(2). Linking this lightweight block to the penultimate block.
(3). Removing previously stored parameters upon confirmation of new parameter storage and validation.

This methodology enables us to delete recently superseded model updates from the ledger once new, stored versions are secured and confirmed. The result is a regularly optimized shared ledger that maintains lightweight records, ensuring efficient use of resources and improved scalability of the system. This approach balances the need for historical recordkeeping with the practical constraints of managing large AI model data within a blockchain framework.

Figure 4 presents schematically the evolution of an exemplary Ledger as a result of the application of successive validations.

As shown, four trainer nodes participate in three successive training operations, with the proposals issued by the trainer nodes being represented in respective lanes 401, 402, 403 and 404.

As such, as shown, the initial configuration is defined by Armour block 411, following on from verge node 410. As a result of a first training operation, Trainer Node 1 and Trainer node 3 propose respective new configurations, represented in the series of security blocks 420, 421, 423, and Armour Block 424 as regards the proposal of Trainer node 1, and the series of security blocks 430, 431, and Armour Block 433 as regards the proposal of Trainer node 3. As a result of the validation process described above, as shown the configuration defined in armour block 433 is found to be superior and retained, while the proposal of Trainer Node 1 is disregarded.

As a result of a second training operation, Trainer Node 2 is the only node to make a proposal, represented in the series of security blocks 440, 441, 443, and Armour Block 424. As a result of the validation process described above (which in this case is limited to an assessment of the proof of work) the proposal of Trainer Node 2 is found to be valid, and retained. As discussed below, in order to limit the size of the ledger, older Armour Blocks may be excised. On this basis, as shown at this stage Armour block 411 is also discarded.

As a result of a third training operation, Trainer Nodes 1, 3 and 4 all make proposals. The proposal of Trainer Node 4 is represented in the series of security blocks 451 and Armour Block 452. The proposal of Trainer Node 3 is represented in the series of security blocks 461, 462 and Armour Block 463. The proposal of Trainer Node 1 is represented in the series of security blocks 471, 462 and Armour Block 463. As a result of the validation process described above the proposal of Trainer Node 1 is found to be superior and retained, and the proposals of nodes 3 and 4 discarded. As discussed below, in order to limit the size of the ledger, older Armour Blocks may be excised. On this basis, as shown at this stage Armour block 413 is also discarded.

On this basis, as shown, at the end of the third training operation, the ledger comprises blocks 410, 431, 432, 441, 442, 443, 471, 472 and 473, and the current preferred configuration is defined in armour block 473. As further training operations are performed, new blocks will continue to be added and removed in the same fashion, such that at any time the Ledger defines in an authenticated manner the best validated configuration.

In the event of a malicious trainer attempting to propose a model trained on both the training data and an audit set, or utilizing an unauthorized dataset, the probability of successfully updating the shared ledger remains low. This is due to the inherent challenge of developing a model that generalizes well across the audit sets of other consensus-participating nodes, as it encounters an overfitting problem. This mechanism serves as a robust safeguard against compromised model proposals. For a malicious proposal to succeed in updating the shared ledger, it must overcome the significant hurdle of avoiding overfitting on the validation sets of other participating nodes while still maintaining high performance across diverse audit sets.

Methodological advantages

This distributed evaluation approach offers several methodological advantages:

- Variance Reduction: By evaluating the model on multiple segments of the validation set, we reduce the variance of the evaluation metric, enhancing the reliability of our performance estimates.
- Overfitting Mitigation: This method helps mitigate the risk of overfitting to a particular validation subset, as strong performance across multiple audit sets suggests improved generalization capability.

- Robustness to Data Partitioning: The approach bears similarities to cross-validation technique as discussed in the article by Berrar, Daniel entitled "Cross-validation." Encyclopedia of Bioinformatics and Computational Biology, 2019, where the dataset is partitioned into multiple folds for iterative training and evaluation. By utilizing multiple segments, we reduce the model's sensitivity to specific train-test splits.
- Generalization Assessment: Consistent performance across diverse audit sets provides a more comprehensive insight into the model's ability to generalize across different data subsets.

Further Variants

Infrequent updates and slow development of the ledger can lead to several adverse outcomes. These include unresolved vulnerabilities persisting in the system, which could be exploited, and inadequate responses to emerging security challenges, increasing the risk of unauthorized access and fraudulent activities while using blockchain for securing the training process.

Therefore, regular and timely updates will generally be desirable to maintain the integrity and security of the shared ledger.

To address this issue, variant approaches for generating block sequences during each model update may be adopted within embodiments. These settings leverage the iterative nature of the training process to manage ledger updates effectively for machine learning tasks. Each approach has distinct attributes and is applicable to specific use cases.

Certain variants in mode of operation may be envisaged, in particular as regards the generation of security blocks.

"Light" mode of operation

This configuration maintains a predetermined number of Security blocks (the ledger includes a fixed number of security blocks, between two consecutive Armour Blocks) and is structured as follows:
Security blocks Construction: This setting involves the generation of (z-1) blocks, where z represents a predetermined constant. This constant is designed to ensure the confirmation of the most recent model parameters stored on the Ledger in the sense discussed in the article by Malakhov, Ivan, Andrea Marin, and Sabina Rossi. Entitled "Analysis of the confirmation time in proof-of-work blockchains." Future Generation Computer Systems 147 (2023): 275-291. Two sub-variants within this setting are presented.

   a) Iterative Approach: In this variant, each block incorporates a cryptographic hash reference to the parameters stored in the preceding Armour block (i.e., each Security block contains a hash reference to the same set of model parameters in the last stored Armour block). This configuration is particularly advantageous for training processes characterized by a lower number of epochs but with significant time requirements per epoch, such as those observed in the pre-training phase of Large Language Models (LLMs).

   b) Epoch-based Approach: In this variant, each block encapsulates a cryptographic hash value representing the model's parameter set from individual iterations within a given epoch.

This approach is particularly beneficial for training processes characterized by a higher number of epochs with rapid per-epoch processing times, as commonly observed in the training of visual recognition models. In this configuration, the quantity of Security blocks corresponds directly to the number of iterations within a training epoch, thus providing a comprehensive and high-resolution record of the model's evolutionary trajectory.

Armour block Construction: This variant involves generating a singular terminal block, appended at the end of the sequence, which encapsulates the most recently optimized model parameters. Here, the singular terminal block is relative to the proposed sequence, which should contain one ArmourBlock, and when updating the ledger (using this sequence), we'll keep the last existing one and the new one added.

This setting enables constant-time O(1) ledger updates synchronized with node proposals within the WorkNet. The constant-time performance is a direct result of the invariant size of the generated sequence per update operation.

Flexible Setting

This setting extends the **b)** variant of the light setting as described above. At each iteration, the updated model may produce a loss value exhibiting non-stationary behavior (i.e., higher or lower than the preceding iteration). The setting implements a dynamic construction of Security blocks based on optimization performance :
Security blocks construction: Generated adaptively based on the model version showing optimal performance at each iteration, as measured by loss function metrics. Only versions with lower loss values compared to the previous iteration are retained. This approach leverages the challenge of finding more accurate model versions while exploring the loss landscape's topology. Block generation occurs only when there is demonstrable improvement in loss values relative to the preceding iteration. The number of generated blocks inversely correlates with the optimization algorithm's proximity to local minima of the loss function.

Armour Block Construction: Armour Block Construction: In this case, if the last iteration produces a more accurate model version, the Armour Block will contain these model weights. Otherwise, the Armour Block will contain the most accurate model weights found during the Security Blocks construction.

Both configurations offer distinct trade-offs between a fixed structural paradigm and adaptability in the block sequence construction process. The choice between these methodologies depends on the specific requirements of the machine learning task, computational resources, and desired balance between security and training efficiency.

Optimised Weight Managements

To tackle the issue of exchanging extensive model parameters during validation across participants, context-based methods are envisage to maximize the efficient exchanging of essential model parameters between participants,

In certain embodiments, the exchange and storage of critical model weights may be prioritized, to focus for example on specific segments of model weights in pre-trained large models minimally affects overall model performance, suggesting a refined approach to managing model weights to optimize data transfer and preserve essential information for effective model evaluation and updates.

Embodiments address the Guaranteed Safe Training problem, demonstrating broad applicability across multiple industrial sectors where advanced AI models are in development phases, particularly in domains requiring elevated levels of security and transparency. The technology's potential applications extend to high-stakes sectors such as healthcare, legal systems, finance, autonomous transportation, industrial automation, and scientific research. In these diverse fields, our invention addresses the critical requirement for a secure and reliable training process by auditing training data and verifying and auditing model updates, thus contributing to higher ASLs.

These features render the invention valuable for any domain where AI plays a pivotal role in decision-making processes or autonomous operations, particularly in addressing the Guaranteed Safe Training problem. Furthermore, its support for transparent collaborative efforts has the potential to accelerate innovation in multi-party AI development projects while maintaining stringent data control and security standards. In essence, any sector reliant on advanced AI models that requires assurance of the integrity of the training process and aims to achieve higher AI Safety Levels could potentially benefit from this invention. This broad applicability suggests extensive and diverse industrial applications across numerous fields of technological advancement and scientific inquiry, particularly in areas where AI safety and ethics are paramount concerns and where solving the Guaranteed Safe Training problem is critical.

It will be appreciated that the method of figure 1 is presented primarily from the perspective of the Training node, but that the same underlying principles may also be presented from the perspective of the Audit node as discussed above.

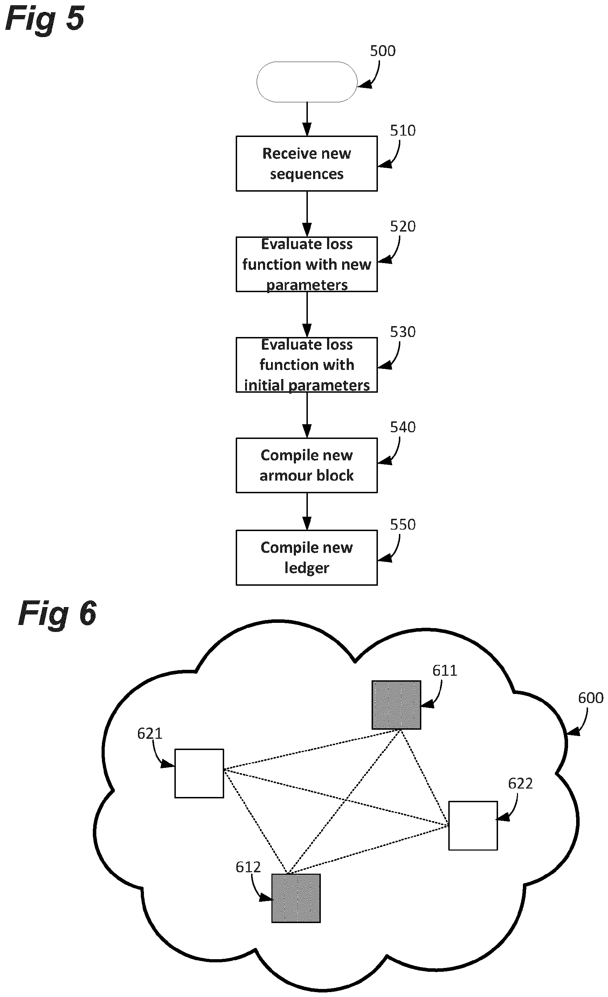

Figure 5 presents a method for performing training of a multilayer perceptron machine learning model comprising a plurality of neurons in accordance with a further embodiment.

In particular, Figure 5 presents a method for performing training of a multilayer perceptron machine learning model comprising a plurality of neurons in accordance in a system comprising a plurality of processing nodes, from the perspective of an audit node as discussed above, in a manner complementary to the discussion of the method of figure 1.

In accordance with the foregoing discussion, the method is performed with reference to a ledger comprising a sequence of blocks reflecting the parameters of the neurons.

As shown, the method starts at step 500 before proceeding to step 510 at which a plurality of respective sequences of security blocks and corresponding new armour blocks are received from a respective plurality of trainer nodes belonging to the processing nodes, each respective sequence of security blocks and corresponding new armour blocks being obtained at a respective training node as the result of a training operation performed on the basis of a common initial armour block, the initial armour block comprising respective weight matrices for each neuron, together with a hash of a preceding block in the ledger, a nonce value, and a timestamp.

The method then proceeds to step 520 at which a loss function of the multilayer perceptron machine learning model using a first validation data set comprising a respective specified subset of the training dataset when incorporating the parameters specified by each new armour block comprising respective weight matrices for each neuron obtained as a final result of the training operation is evaluated.

At step 530 a loss function of the multilayer perceptron machine learning model using the first validation data set, when incorporating the parameters specified by when incorporating the parameters specified by the initial armour block, is performed.

At step 540 a new ledger file is compiled on the basis of the new armour block and associated security blocks representing the lowest overall error function.

It will be appreciated that steps 530 and 540 may be performed in any sequence, or in parallel. It will also be appreciated that step 540 may be performed in advance of step 510, i.e. during the preceding iteration, and the results stored for later use.

Optionally, the method of figure 5 may comprise a further step of transmitting the new ledger file to the trainer node for a further iteration of training, in line with the foregoing discussion.

Any of the additional steps and variants described above, e.g. with reference to the method of figure 1, may be incorporated mutatis mutandis in the method of figure 5.

The methods of figure 1 or 5, including any of the additional steps and variants described above may be implemented by a suitably programmed computer, and may be embodied in a computer program for such a computer, or a computer readable medium bearing such a computer program.

The term "program" may be used to describe an aspect of computing system implemented to perform a particular function. In some cases, a program may be instantiated via logic device executing machine-readable instructions. It will be understood that different modules may be instantiated from the same application, service, code block, object, library, routine, API, function, etc. Likewise, the same program may be instantiated by different applications, services, code blocks, objects, routines, APIs, functions, etc. The term "program" may encompass individual or groups of executable files, data files, libraries, drivers, scripts, database records, etc.

A computer readable medium may comprise for example one or more types of storage device including optical memory (e.g., CD, DVD, HD-DVD, Blu-Ray Disc, etc.), semiconductor memory (e.g., FLASH, RAM, EPROM, EEPROM, etc.), and/or magnetic memory (e.g., hard-disk drive, floppy-disk drive, tape drive, MRAM, etc.), among others. Storage device may include volatile, non-volatile, dynamic, static, read/write, read-only, random-access, sequential-access, location-addressable, file-addressable, and/or content-addressable devices.

It will be appreciated that a storage device may include one or more physical devices, and excludes propagating signals per se. However, aspects of the instructions described herein alternatively may be propagated by a communication medium (e.g., an electromagnetic signal, an optical signal, etc.), as opposed to being stored on a storage device.

Figures 1 and 5 present embodiments in the form of methods. Other embodiments may take the form of a system.

Figure 6 presents a system in accordance with certain embodiments.

As shown in figure 6, there is provided a system 600 for performing training for a multilayer perceptron machine learning model comprising a plurality of neurons, with reference to a ledger comprising a sequence of blocks reflecting the parameters of the neurons, the system comprising a plurality of processing nodes 611, 612, 621, 622 , the nodes comprising a trainer node, 611 the trainer node being configured to retrieve an initial armour block comprising respective weight matrices for each neuron, together with a hash of a preceding block in the ledger, a nonce value, and a timestamp, e.g. as discussed with reference to figure 2.

In accordance with embodiments and in coherence with the foregoing methods, the trainer node 611 is further configured to retrieve an initial security block comprising a hash of the penultimate set of weights obtained in a training operation of the initial amour block together with a hash of a preceding block in the ledger, a nonce value, and a timestamp e.g. as discussed with reference to figure 2.

In accordance with embodiments and in coherence with the foregoing methods, the trainer node 611 is further configured to perform a training operation on the basis of the initial armour block.

In accordance with embodiments and in coherence with the foregoing methods, the trainer node 611 is further configured during the training operation to define a sequence of security blocks, each security block comprising a hash of the weights obtained in the training operation at the time of definition of the respective security blocks together with a hash of the preceding security block in the sequence, a nonce value, and a timestamp.

In accordance with embodiments and in coherence with the foregoing methods, the trainer node is further configured on completion of the training operation to compile a new armour block comprising respective weight matrices for each neuron obtained as a final result of the training operation, together with a hash of the last security block defined, a nonce value, and a timestamp,

In accordance with embodiments and in coherence with the foregoing methods, the trainer node is further configured to obtain a new ledger file comprising the initial security block, the initial armour block, each security block and the new armour block,

The initial armour block and the new armour block additionally define an architecture of the multilayer perceptron machine learning model, wherein the trainer node 611 is further configured during the training operation to identify amendments to the architecture of the multilayer perceptron machine learning model, and to compile the new armour block incorporating a representation of the amendments to the architecture of the multilayer perceptron machine learning model in the new armour block.

Optionally, as shown, the system 600 comprises a plurality of the training nodes 611, 612, each configured as described with respect to element 611 above.

Each trainer node 611, 612 preferably is defined as having equivalent processing power.

The system of figure 6 may be further configured to implement any of the additional steps and variants described above, e.g. with reference to the method of figure 1 or 5.

Figure 6 further presents a system for performing training for a multilayer perceptron machine learning model comprising a plurality of neurons, with reference to a ledger comprising a sequence of blocks reflecting the parameters of the neurons, the system comprising a plurality of processing nodes 611, 612, 621, 622, the nodes comprising a plurality of audit nodes 621, 622 including a first audit node 621.

In accordance with embodiments and in coherence with the foregoing methods, the first audit node 621 is configured to receive a plurality of respective sequences of security blocks and corresponding new armour blocks e.g. as discussed with reference to figure 2 from a respective plurality of trainer nodes 611, 612, each respective sequence of security blocks and corresponding new armour blocks being obtained at a respective processing node as the result of a training operation performed on the basis of a common initial armour block, the initial armour block comprising respective weight matrices for each neuron, together with a hash of a preceding block in the ledger, a nonce value, and a timestamp.

In accordance with embodiments and in coherence with the foregoing methods, the first audit node 621 is further configured evaluate a loss function of the multilayer perceptron machine learning model using a first validation data set, when incorporating the parameters specified by each new armour block comprising respective weight matrices for each neuron obtained as a final result of the training operation, together with a hash of the last security block defined, a nonce value, and a timestamp provided by a trainer node belonging to the processing nodes as a result of a training operation.

In accordance with embodiments and in coherence with the foregoing methods, the first audit node 621 is further configured evaluate a loss function of the multilayer perceptron machine learning model using the first validation data set, when incorporating the parameters specified by when incorporating the parameters specified by the initial armour block.

In accordance with embodiments and in coherence with the foregoing methods, the first audit node 621 is further configured compile a new ledger file on the basis of the new armour block and associated security blocks representing the lowest overall error function.

The system of figure 6 may be further configured to implement any of the additional steps and variants described above, e.g. with reference to the method of figure 1 or 5.

As such, there is provided a distributed mechanism for the training of neural networks is presented, in which Training nodes perform training operations in parallel on the basis of a common training data set and parameters defined in a common Ledger, and submit security blocks ensuring a cryptographic continuity with respect to the Ledger, and eventually respective proposals for new parameters to Audit nodes. The audit nodes assess the proposals on the basis of a proof of work and a loss function to reach a consensus for the selection of a set of new parameters for inclusion in the Ledger maintaining cryptographic continuity in the manner of a block chain. Older parameter sets may be deleted to control ledger size. Audit blocks may assess the loss function on the basis of different respective audit sets, each statistically coherent with the overall training set.

It will be understood that the configurations and/or approaches described herein are exemplary in nature, and that these specific embodiments or examples are not to be considered in a limiting sense, because numerous variations are possible. The specific routines or methods described herein may represent one or more of any number of processing strategies. As such, various acts illustrated and/or described may be performed in the sequence illustrated and/or described, in other sequences, in parallel, or omitted. Likewise, the order of the above-described processes may be changed.

The subject matter of the present disclosure includes all novel and non-obvious combinations and sub-combinations of the various processes, systems and configurations, and other features, functions, acts, and/or properties disclosed herein, as well as any and all equivalents thereof.

**Claims**

1. A computer implemented method for performing training of a multilayer perceptron machine learning model comprising a plurality of neurons, in a system comprising a plurality of processing nodes, with reference to a ledger comprising a sequence of blocks reflecting the parameters of said neurons, said method comprising performing the steps of:

   retrieving an initial armour block comprising respective weight matrices for each said neuron, together with a hash of a preceding block in said ledger, a nonce value, and a timestamp,
   retrieving an initial security block comprising a hash of the penultimate set of weights obtained in a training operation of said initial armour block together with a hash of a preceding block in said ledger, a nonce value, and a timestamp,
   wherein said processing nodes comprise a trainer node, said method comprising the further step of performing a training operation using a training dataset at the trainer node on the basis of said initial armour block,
   during the training operation, defining a sequence of security blocks, each said security block comprising a hash of the weights obtained in said training operation at the time of definition of the respective security blocks together with a hash of the preceding said security block in said sequence, a nonce value, and a timestamp,

on completion of said training operation, compiling a new armour block comprising respective weight matrices for each said neuron obtained as a final result of said training operation, together with a hash of the last said security block defined, a nonce value, and a timestamp,

defining a new ledger comprising said initial security block, said initial armour block, each said security block and said new armour block.

2. The method of claim 1 wherein said initial armour block and said new armour block additionally define an architecture of said multilayer perceptron machine learning model, and wherein said training operation further comprises identifying amendments to said architecture of said multilayer perceptron machine learning model, and wherein said step of compiling a new armour block further comprises incorporating a representation of said amendments to said architecture of said multilayer perceptron machine learning model in said new armour block.

3. The method of any preceding claim wherein said steps of performing a training operation, said step of defining a sequence of security blocks and said step of compiling a new armour block are performed in parallel at a plurality of said training nodes on the basis of a common initial security block and initial armour block, and a common said training dataset so as to provide a corresponding plurality of sequences of security blocks and associated new armour blocks.

4. The method of claim 3 comprising a further step of evaluating a loss function of the respective multilayer perceptron machine learning model when incorporating the parameters specified by each new armour block, whereby at said step of defining a new ledger file, the sequence of security blocks and new armour block incorporated in said new ledger file are the new armour block providing the smallest loss function, and the sequence of security blocks associated therewith.

5. The method of claim 4 wherein said processing nodes further comprise a plurality of audit nodes, wherein said method comprises a further step each trainer node broadcasting the respective sequence of security blocks and new armour block to all other processing nodes, and wherein said step of evaluating a loss function is performed in parallel at said plurality of audit nodes.

6. The method of claim 5 wherein each said audit node evaluates a loss function for a said multilayer perceptron machine learning model using a first validation data set, when incorporating the parameters specified by each new armour block, and wherein each said audit node evaluates a loss function for said multilayer perceptron machine learning model using said first validation data set, and compiling said new ledger file on the basis of the new armour block and associated security blocks representing the lowest overall error function.

7. The method of claim 6 wherein each said audit node evaluates a loss function for a said multilayer perceptron machine learning model using a first validation data set specified by each new armour block received within a specified period from said step retrieving an initial armour block.

8. A computer implemented method for performing training of a multilayer perceptron machine learning model comprising a plurality of neurons, in a system comprising a plurality of processing nodes, with reference to a ledger comprising a sequence of blocks reflecting the parameters of said neurons, said method comprising the steps of:

receiving a plurality of respective sequences of security blocks and corresponding new armour blocks from a respective plurality of trainer nodes belonging to said processing nodes, each said respective sequence of security blocks and corresponding new armour blocks being obtained at a respective said training node as the result of a training operation performed on the basis of a common initial armour block, said initial armour block comprising respective weight matrices for each said neuron, together with a hash of a preceding block in said ledger, a nonce value, and a timestamp;

evaluating a loss function of said multilayer perceptron machine learning model using a first validation data set comprising a respective specified subset of said training dataset, when incorporating the parameters specified by each said new armour block comprising respective weight matrices for each said neuron obtained as a final result of said training operation, together with a hash of the last said security block defined, a nonce value, and a timestamp provided by a trainer node belonging to said processing nodes as a result of a training operation,

evaluating a loss function of said multilayer perceptron machine learning model using said first validation data set, when incorporating the parameters specified by when incorporating the parameters specified by said initial armour block,

and, compiling a new ledger file on the basis of the new armour block and associated security blocks representing the lowest overall error function.

9. the method of claim 8 comprising a further step of changing the role of one or more nodes from the role of audit node to the role of trainer node, or vice versa, between any two said iterations.

10. A computer program comprising instructions in which, when the program is executed by a computer, cause the computer to carry out the method of any preceding claim.

11. A computer-readable medium comprising instructions which, when executed by a computer, cause the computer to carry out the method of any of claims 1 to 9.

12. A system for performing training for a multilayer perceptron machine learning model comprising a plurality of neurons, with reference to a ledger comprising a sequence of blocks reflecting the parameters of said neurons, said system comprising a plurality of processing nodes, said nodes comprising a trainer node, the trainer node being configured to retrieve an initial armour block comprising respective weight matrices for each said neuron, together with a hash of a preceding block in said ledger, a nonce value, and a timestamp,

retrieve an initial security block comprising a hash of the penultimate set of weights obtained in a training operation of said initial amour block together with a hash of a preceding block in said ledger, a nonce value, and a timestamp, perform a training operation at the trainer node on the basis of said initial armour block, the trainer node being further configured during the training operation to definine a sequence of security blocks, each said security block comprising a hash of the weights obtained in said training operation at the time of definition of the respective security blocks together with a hash of the preceding said security block in said sequence, a nonce value, and a timestamp, the trainer node being further configured on completion of said training operation to compile a new armour block comprising respective weight matrices for each said neuron obtained as a final result of said training operation, together with a hash of the last said security block defined, a nonce value, and a timestamp, the trainer node being further configured to obtain a new ledger file comprising said initial security block, said initial armour block, each said security block and said new armour block.

13. The system of claim 12 wherein said initial armour block and said new armour block additionally define an architecture of said multilayer perceptron machine learning model, and wherein said the trainer node is further configured during said training operation to identify amendments to said architecture of said multilayer perceptron machine learning model, and to compiling the new armour block incorporating a representation of said amendments to said architecture of said multilayer perceptron machine learning model in said new armour block.

14. The system of any of claims 12 to 13wherein each said trainer node has equivalent processing power.

15. A system for performing training for a multilayer perceptron machine learning model comprising a plurality of neurons, with reference to a ledger comprising a sequence of blocks reflecting the parameters of said neurons, said system comprising a plurality of processing nodes, said nodes comprising a plurality of audit nodes including a first audit node, the first audit node being configured to

receive a plurality of respective sequences of security blocks and corresponding new armour blocks from a respective plurality of trainer nodes belonging to said processing nodes, each said respective sequence of security blocks and corresponding new armour blocks being obtained at a respective said processing node as the result of a training operation performed on the basis of a common initial armour block, said initial armour block comprising respective weight matrices for each said neuron, together with a hash of a preceding block in said ledger, a nonce value, and a timestamp; evaluate a loss function of said multilayer perceptron machine learning model using a first validation data set, when incorporating the parameters specified by each said new armour block comprising respective weight matrices for each said neuron obtained as a final result of said training operation, together with a hash of the last said security block defined, a nonce value, and a timestamp provided by a trainer node belonging to said processing nodes as a result of a training operation, evaluate a loss function of said multilayer perceptron machine learning model using said first validation data set, when incorporating the parameters specified by when incorporating the parameters specified by said initial armour block,

compile a new ledger file on the basis of the new armour block and associated security blocks representing the lowest overall error function.

# *Fig 1a*

# *Fig 1b*

## Fig 2

211  212  213  214  215  216  220

Verge block   Armour Block

Security Block   Security Block   Security Block   Security Block   Security Block

## Fig 3

30

300   310

Verge block   Armour Block

311   312   313   314   315   316   320

Verge block   Armour Block

Security Block   Security Block   Security Block   Security Block   Security Block

## Fig 4

Trainer node 1

420   421   423   424   471   472   473   401

Trainer node 2

410   411   441   442   443   444   402

Trainer node 3

431   432   433   461   462   463   403

Trainer node 4

451   452   403

**Fig 5**

500

510
Receive new
sequences

520
Evaluate loss
function with new
parameters

530
Evaluate loss
function with
initial parameters

540
Compile new
armour block

550
Compile new
ledger

**Fig 6**

611

600

621

622

612

**EP 4 703 945 A1**

| | Europäisches Patentamt European Patent Office Office européen des brevets | **EUROPEAN SEARCH REPORT** | Application Number EP 24 30 6430 |
|---|---|---|---|

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 116 029 370 A (HANGZHOU HIKVISION DIGITAL TEC) 28 April 2023 (2023-04-28) * paragraphs [0002] - [0125] * ----- | 1-15 | INV. G06F21/64 G06N3/098 |
| A | CN 114 785 494 A (CHINA ACADEMY INF & COMM TECH) 22 July 2022 (2022-07-22) * the whole document * ----- | 1-15 | |
| A | NAVARRO EDGAR ET AL: "Ensuring Trustworthy Neural Network Training via Blockchain", 2023 IEEE 5TH INTERNATIONAL CONFERENCE ON COGNITIVE MACHINE INTELLIGENCE (COGMI), IEEE, 2 November 2023 (2023-11-02), pages 31-40, XP034550969, DOI: 10.1109/COGMI58952.2023.00015 [retrieved on 2024-02-19] * pages 31-38 * ----- | 1-15 | |
| | | | **TECHNICAL FIELDS SEARCHED (IPC)** G06F G06N |

The present search report has been drawn up for all claims

| Place of search | Date of completion of the search | Examiner |
|---|---|---|
| The Hague | 21 January 2025 | Moran, Matthew |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

22

## ANNEX TO THE EUROPEAN SEARCH REPORT
## ON EUROPEAN PATENT APPLICATION NO.

EP 24 30 6430

This annex lists the patent family members relating to the patent documents cited in the above-mentioned European search report.
The members are as contained in the European Patent Office EDP file on
The European Patent Office is in no way liable for these particulars which are merely given for the purpose of information.

21-01-2025

| Patent document cited in search report | Publication date | Patent family member(s) | Publication date |
|---|---|---|---|
| CN 116029370 A | 28-04-2023 | NONE | |
| CN 114785494 A | 22-07-2022 | NONE | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **CHOI, D.** ; **SHAVIT, Y.** ; **DUVENAUD, D. K.** Tools for verifying neural models' training data. *Advances in Neural Information Processing Systems*, 2024, vol. 36
- **WAIWITLIKHIT, SUPPAKIT et al.** Trustless Audits without Revealing Data or Models. *arXiv preprint arXiv:2404.04500*, 2024
- **KUTTICHIRA, D. P.** ; **GUPTA, S.** ; **NGUYEN, D.** ; **RANA, S.** ; **VENKATESH, S.** Verification of integrity of deployed deep learning models using Bayesian Optimization. *Knowledge-based systems*, 2022, vol. 241, 108238
- **HE, Z.** ; **ZHANG, T.** ; **LEE, R. B.** Verideep: Verifying integrity of deep neural networks through sensitive-sample fingerprinting. *arXiv preprint ar-Xiv:1808.03277*, 2018

- **GOEL, A.** ; **AGARWAL, A.** ; **VATSA, M** ; **SINGH, R.** ; **RATHA, N.** DeepRing: Protecting deep neural network with blockchain. *Proceedings of the IEEE/CVF conference on computer vision and pattern recognition workshops*, 2019, 0-0
- Cross-validation. **BERRAR, DANIEL**. Encyclopedia of Bioinformatics and Computational Biology. 2019
- **MALAKHOV, IVAN** ; **ANDREA MARIN** ; **SABINA ROSSI**. Analysis of the confirmation time in proof-of-work blockchains.. *Future Generation Computer Systems*, 2023, vol. 147, 275-291